# EUROPÄISCHE PATENTSCHRIFT

(11) **EP 0 879 377 B1**
(45) Veröffentlichungstag und Bekanntmachung des Hinweises auf die Patenterteilung: **17.04.2002**
(21) Anmeldenummer: 97900981.8
(22) Anmeldetag: 09.01.1997
(51) Int. Cl.: F16L 21/08, F16L 19/08, F16L 47/06

(54) **LÖSBARE ROHRVERBINDUNG FÜR KUNSTSTOFFROHRE**
DETACHABLE PIPE JOINT FOR PLASTIC PIPES
RACCORD AMOVIBLE POUR TUYAUX EN PLASTIQUE

(30) Priorität: 09.01.1996 DE 29600241 U
(43) Veröffentlichungstag der Anmeldung: 25.11.1998
(73) Patentinhaber: GEBO-ARMATUREN GmbH, 58332 Schwelm (DE)
(72) Erfinder: ROSE, Heinz, D-44892 Bochum (DE)
(74) Vertreter: Harazim, Eugen, Dipl.-Phys.
(86) Internationale Anmeldenummer: EP9700072
(87) Internationale Veröffentlichungsnummer: WO9725563

(56) Entgegenhaltungen:
- EP-A- 0 541 469
- GB-A- 2 291 153
- US-A- 4 878 698
- US-A- 5 121 949

## Beschreibung

Die Erfindung betrifft eine lösbare Rohrverbindung für Kunststoffrohre für flüssige oder gasförmige Medien gemäß dem Oberbegriff des Anspruchs 1. Solche Rohrverbindungen sind bekannt.

Bei einer in der Praxis benutzten Rohrverbindung dieser Art ist zum Verspannen des Rohrendes in einer starren Muffe ein Flanschring vorgesehen, der mit Hilfe von achsparallelen Schrauben gegen die Muffe verspannbar ist. An einer Kegelfläche an der Innenseite des Flanschringes liegt ein geschlitzter Klemmring mit gewölbter oder konischer Oberfläche an, der durch den Axialdruck des Flanschringes gegen die Mantelfläche des zu verbindenden Rohres gepreßt wird, wodurch Rohr und Muffe fest miteinander verbunden werden. In einer Dichtkammer zwischen einem am Klemmring anliegenden Vorlegering und dem Stirnende der Muffe sitzt ein elastischer Dichtring. Weiter ist im Innern des Rohrendes eine starre Hülse zur Abstützung des Kunststoffrohres im Dichtbereich eingesetzt.

Diese bekannte Rohrverbindung erfüllt unter normalen Betriebsbedingungen die gestellten Anforderungen. Bei höheren Temperaturen des Betriebsmediums oder bei häufig wechselnden Temperaturen sind trotz sorgfältiger Ausführung der Dichtelemente im Laufe der Zeit Leckagen aufgetreten. Hier will die Erfindung Abhilfe schaffen.

Die Aufgabe der Erfindung besteht dementsprechend darin, eine lösbare Rohrverbindung für Kunststoffrohre dahingehend weiterzuentwickeln und zu verbessern, daß eine zuverlässige Abdichtung unter allen zu erwartenden Betriebsbedingungen gewährleistet ist, wobei die Verbesserung so beschaffen sein soll, daß sie kostengünstig ausführbar ist und in der Handhabung der Rohrverbindung gegenüber der bekannten Rohrverbindung keine Nachteile mit sich bringt.

Diese Aufgabe wird erfindungsgemäß durch eine Rohrverbindung gemäß den Merkmalen des Anspruchs 1 gelöst.

Die Schaffung einer zuverlässigen Abdichtung wird erfindungsgemäß dadurch bewirkt, daß die an sich vorhandene starre Stützhülse als zusätzliches Dichtelement ausgebildet und eingesetzt wird. Ein wichtiger Vorteil hierbei ist, daß die Abdichtung zugleich mit dem Herstellen der Verbindung in der gewohnten Art vollzogen wird. Bei dieser Abdichtung ist der vorstehende Abschnitt der Stützhülse nach Art eines Kolbens in einer zylindrischen Bohrung der Muffe formschlüssig geführt, wobei der Ringspalt zwischen den beiden Metallteilen durch einen elastischen O-Ring abgedichtet wird. Auf diese Weise ist mit konstruktiv einfachen und funktionssicheren Bauteilen eine zuverlässige Abdichtung gegeben, die auch durch hohe oder häufig wechselnde Temperaturen des Betriebsmediums in ihrer Dichtwirkung nicht beeinträchtigt wird.

Vorteilhafte Weiterbildungen der Erfindung sind in den Unteransprüchen beschrieben.

Für den vorstehenden Hülsenabschnitt wird zweckmäßigerweise eine größere radiale Wandstärke als für den Abschnitt innerhalb des Rohres gewählt. Dabei kann die radiale Verdickung sich nach außen oder innen erstrecken. Bei einer bevorzugten Ausführung hat der vorstehende Hülsenabschnitt den gleichen Außendurchmesser wie der Abschnitt der Stützhülse innerhalb des Rohres.

Für den elastischen Dichtring innerhalb der umlaufenden Nut wird vorzugsweise ein O-Ring aus Gummi eingesetzt.

Das Verspannen der Rohrverbindung kann mit Hilfe eines Spannringes und zugehörigen achsparallelen Schraubenbolzen oder mit Hilfe einer Überwurfmutter bewirkt werden. Bei Verwendung einer Überwurfmutter enthält die Muffe ein entsprechendes Außengewinde. In beiden Fällen wird beim Verspannen auf den geschlitzten Klemmring eine Druckkraft ausgeübt, die aufgrund der gewölbten oder konischen Oberfläche des Klemmrings ein radiales Zusammenziehen desselben und damit die Übertragung radialer Kräfte auf die Oberfläche des zu verbindenden Rohres bewirkt. Durch diese radiale Verklammerung wird das eingeschobene Rohrende in der Muffe in allen Richtungen unbeweglich festgehalten.

Ein Ausführungsbeispiel der Erfindung ist in der Zeichnung dargestellt und wird nachfolgend näher erläutert. Es zeigt:

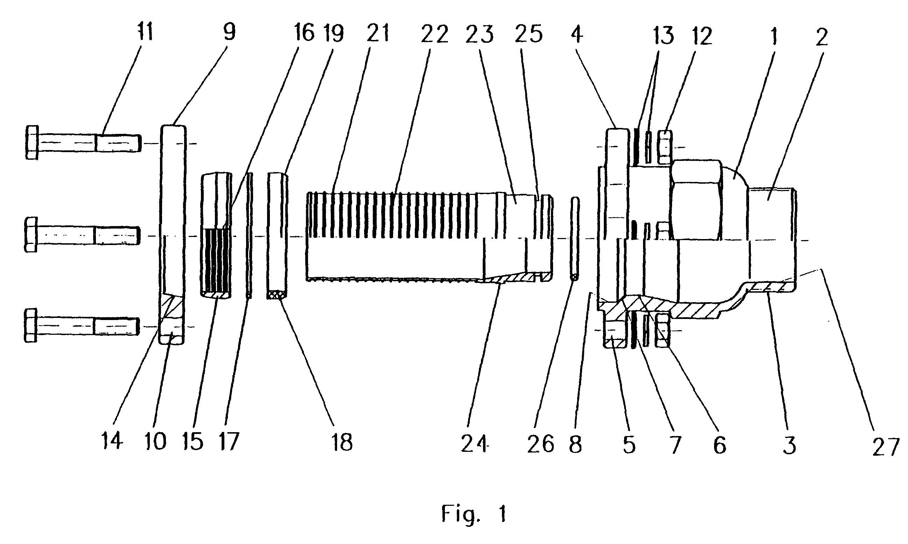

- Fig. 1: eine Seitenansicht der Einzelteile einer Rohrverbindung gemäß der Erfindung vor ihrem Zusammenbau, teilweise als Axialschnitt, und
- Fig. 2: eine Seitenansicht der Rohrverbindung nach dem Zusammenbau im Betriebszustand, ebenfalls zur Hälfte in einem Axialschnitt.

Bei dem dargestellten Ausführungsbeispiel ist zum Verspannen der Rohrverbindung ein Flanschring vorgesehen. Zu den Bestandteilen der Rohrverbindung gehört eine starre Muffe 1, an der an einem Ende ein eingeschnürter Hals 2 mit einem Außengewinde 3 angeformt ist. Mit diesem Außengewinde 3 ist die Muffe 1 mit einem weiterführenden Rohr oder einer anderen Armatur verbindbar.

An ihrem anderen Ende trägt die Muffe 1 außen einen angeformten Flansch 4 mit einer etwa quadratischen Umrißkontur. An den vier Ecken des Flansches 4 ist je eine achsparallele Bohrung 5 vorgesehen, wobei zwei diametral gegenüberliegende Bohrungen auch radial nach außen offen ausgebildet sein können.

Die Muffe 1 enthält im Innern einen radial eingeschnürten Wandungsabschnitt 6, dessen Innendurchmesser so bemessen ist, daß er das Ende des zu verbindenden Rohres mit Spiel umschließt. Dem Wandungsabschnitt 6 ist ein trichterförmiger Abschnitt 7 und daran anschließend ein zylindrischer Abschnitt 8 vorgelagert. Dieser Bereich bildet zusammen mit der Mantelfläche des zu verbindenden Rohres eine stirnseitig offene ringförmige Dichtkammer, die noch erläutert wird.

Zum Verspannen der Rohrverbindung dient ein Spannring 9, der in seiner Außenkontur mit dem Ringflansch 4 an der Muffe 1 übereinstimmt und ebenfalls vier Bohrungen 10 aufweist. Als Spannmittel dienen dabei vier Schraubenbolzen 11 und zugehörige Muttern 12 sowie Vorlegescheiben 13.

Der Spannring 9 ist innen auf einem Großteil seiner axialen Länge als nach außen sich erweiternde Konusfläche 14 ausgebildet. Mit dieser Konusfläche 14 wirkt ein Klemmring 15 zusammen, dessen äußere Mantelfläche in Richtung auf den Spannring 9 schwach gewölbt oder konisch ausgebildet ist. Der aus Metall oder Kunststoff bestehende Klemmring 15 enthält einen axial verlaufenden Schlitz 16 und ist auf diese Weise elastisch radial verformbar. Zu den weiteren Funktionsteilen gehören ein metallischer Vorlegering 17 und ein elastischer Dichtring 18, der an der der Muffe 1 zugewandten Seite außen eine Konusfiäche 19 aufweist.

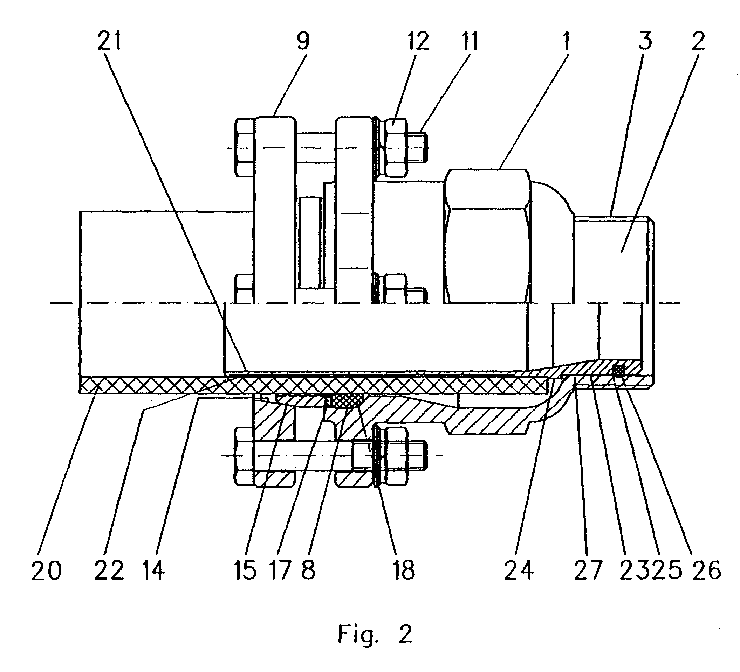

Die räumliche Lage, die die vorgenannten Funktionsteile in der Betriebsstellung einnehmen, zeigt die Fig. 2.

In Fig. 2 ist ferner das Ende 20 eines zu verbindenden Kunststoffrohres veranschaulicht. Vor dem Einschieben des Rohrendes 20 in die Muffe 1 wird in das Rohrende eine starre Stützhülse 21 eingesetzt. Diese Stützhülse hat die Aufgabe, die Radialkräfte abzufangen, die bei der Verspannung der Rohrverbindung auf das Kunststoffrohr übertragen werden. Die Stützhülse 21 enthält außen in Achsrichtung aufeinanderfolgende umlaufende Rippen 22, durch die der Zusammenhalt zwischen dem Rohrende 20 und der Stützhülse 21 verstärkt und damit zugleich auch die Abdichtung verbessert wird.

Die Stützhülse 21 enthält einen gegenüber dem Rohrende 20 vorstehenden Abschnitt 23, der bei gleichem Außendurchmesser eine größere radiale Wandstärke aufweist. Am inneren Ende des vorstehenden Abschnittes 23 ist außen ein umlaufender Flansch 24 angeformt, der beim Einschieben der Stützhülse 21 in das Rohrende 20 als Anschlag dient und damit die maximale Einschubtiefe festlegt. Im vorstehenden Abschnitt 23 der Stützhülse 21 ist mit Abstand von seinem Stirnende eine umlaufende Nut 25 enthalten, in der ein elastischer Dichtring 26, vorzugsweise ein O-Ring aus Gummi, einliegt.

Der Halsteil 2 der Muffe 1 ist innen als glatte zylindrische Bohrung 27 ausgebildet, deren Innendurchmesser dem Außendurchmesser des vorstehenden Abschnittes 23 der Stützhülse 21 entspricht.

Zum Verbinden des Rohrendes 20 mit der Muffe 1 wird, wie bereits erwähnt, zunächst die Stützhülse 21 in das Rohrende 20 eingepreßt, bis der Flanschring 24 an der Stirnseite des Rohrendes 20 anliegt. Dabei entsteht dank der elastischen Radialkräfte des Kunststoffrohres eine Abdichtung zwischen Rohrende 20 und Stützhülse 21. Durch das spätere Verspannen der Rohrverbindung wird diese Abdichtung im Bereich des Klemmrings 15 durch die von diesem erzeugten Radialkräfte unterstützt. Außerdem wird die Abdichtung dauerhaft begünstigt durch die umlaufenden Rippen 22 an der Außenfläche der Stützhülse 21.

Die losen Einzelteile, wie der Spannring 9, der Klemmring 15, der Vorlegering 17 und der Dichtring 18, werden zweckmäßigerweise vor dem Einsetzen der Stützhülse 21 auf das Rohrende 20 aufgeschoben. Das so vorbereitete Rohrende wird nun in die Muffe 1 eingeführt und mit dem vorstehenden Abschnitt 23 der Stützhülse 21 in die Bohrung 27 im Halsteil 2 der Muffe 1 bis zur gewünschten Endstellung eingeschoben. In dieser Stellung ist die Abdichtung zwischen dem vorstehenden Abschnitt 23 und der Bohrung 27 durch den elastischen O-Ring 26 gegeben. Anschließend werden die Teile 15, 17 und 18 an die Muffe 1 angedrückt und mit Hilfe des Spannrings 9 durch Anziehen der Muttern 12 verspannt. Der elastische Dichtring 18 und der Vorlegering 17 liegen dabei in der ringförmigen Dichtkammer an der Stirnseite der Muffe 1, in der sie einem vorgegebenen axiaien Andruck durch den Klemmring 15 ausgesetzt sind. Mit dem Anziehen der Muttern 6 wird der Klemmring 15 aufgrund der Konusfläche 14 am Spannring 15 radial zusammengedrückt und dabei gegen das Rohrende 20 fest verspannt. Auf diese Weise ist eine zug- und druckfeste Verbindung zwischen Rohrende 20 und Muffe 1 gegeben.

Bei den zu erwartenden Betriebsbedingungen ist die zuverlässige Abdichtung der Rohrverbindung durch die Dichtung des vorstehenden Abschnitts 23 der Stützhülse 21 im Halsteil 2 gewährleistet. Die Abdichtung mit Hilfe des elastischen Dichtringes 18 ist hierbei eine nachgeschaltete Dichtung, die im normalen Betriebszustand ohne Funktion ist. Sollten jedoch die Dichtverbindungen am vorstehenden Abschnitt 23 oder am inneren Abschnitt der Stützhülse 21 versagen, könnte Betriebsmedium in den Raum der Muffe 1 eindringen, und in einem solchen Fall käme die nachgeschaltete Dichtung mit Hilfe des Dichtringes 18 zum Tragen, die dann eine Leckage nach außen verhindert.

Eine in dieser Weise ausgebildete Rohrverbindung bietet also erheblich mehr Sicherheit. Dies ist besonders dann von Bedeutung, wenn solche Rohrverbindungen im erdverlegten Rohrleitungsbau Anwendung finden, wo evtl. Schäden nicht frühzeitig erkannt werden können.

## Patentansprüche

1. Lösbare Rohrverbindung für Kunststoffrohre für flüssige oder gasförmige Medien mit
- einer starren Muffe, die das Ende des zu verbindenden Rohres aufnimmt,
- einem Spannring, der an der Muffe verspannbar ist und auf einen das Rohr umschließenden geschlitzten Klemmring eine axiale Druckkraft ausübt,
- einem starren Vorlegering und einem elastischen Dichtring, der in einer Dichtkammer am Stirnende der Muffe einliegt, und
- einer starren Stützhülse im Innern des Rohrendes, mit einer Profilierung, z. B. in Form umlaufender Rippen,
**gekennzeichnet durch** die Merkmale:
- die Stützhülse (21) enthält einen äußeren, gegenüber dem Rohrende (20) vorstehenden Hülsenabschnitt (23),
- am vorstehenden Hülsenabschnitt (23) ist mit Abstand vom freien Ende ein Außenflansch (24) als Einschubbegrenzung angeformt,
- der vorstehende Hülsenabschnitt (23) besitzt außen wenigstens eine umlaufende Nut (25) mit einem darin gehaltenen elastischen Dichtring (26),
- die Muffe (1) weist an ihrem freien Ende eine zur Rohrachse konzentrische Bohrung (27) mit glatter Wandung auf, deren Innendurchmesser dem Außendurchmesser des vorstehenden Hülsenabschnittes (23) entspricht und
- in der Verbindungsstellung ist der vorstehende Hülsenabschnitt (23) in der Bohrung (27) der Muffe (1) formschlüssig geführt.

2. Rohrverbindung nach Anspruch 1, **dadurch gekennzeichnet, daß** der vorstehende Hülsenabschnitt (23) eine größere radiale Wandstärke hat als der Abschnitt innerhalb des Rohrendes (20).

3. Rohrverbindung nach Anspruch 1 oder 2, **dadurch gekennzeichnet, daß** der vorstehende Hülsenabschnitt (23) den gleichen Außendurchmesser wie der innerhalb des Rohrendes (20) liegende Abschnitt aufweist.

4. Rohrverbindung nach einem der Ansprüche 1 bis 3, **dadurch gekennzeichnet, daß** der elastische Dichtring (26) innerhalb der umlaufenden Nut (25) ein O-Ring aus Gummi ist.

5. Rohrverbindung nach einem der Ansprüche 1 bis 4, **dadurch gekennzeichnet, daß** der Spannring (9) als Flanschring ausgebildet ist, der mit Hilfe von achsparallelen Schraubenbolzen (11) gegen die Muffe (1) verspannbar ist.

6. Rohrverbindung nach einem der Ansprüche 1 bis 4, **dadurch gekennzeichnet, daß** der Spannring als Überwurfmutter ausgebildet ist, die auf einem an der Muffe vorgesehenen Außengewinde gelagert ist.

## Claims

1. A releasable pipe connection for plastics pipes for liquid or gaseous media, comprising
- a rigid socket which receives the end of the pipe to be connected,
- a clamping ring which can be braced to the socket and which applies an axial pressure force to a slotted clamping ring enclosing the pipe,
- a rigid fitting ring and an elastic sealing ring which is enclosed in a sealing chamber at the end of the socket, and
- a rigid support sleeve in the interior of the pipe end, with a profiling for example in the form of peripherally extending ribs,
**characterised by** the features:
- the support sleeve (21) includes an outer sleeve portion (23) which projects with respect to the pipe end (20),
- formed on the projecting sleeve portion (23) at a spacing from the free end is an external flange (24) as an insertion-limiting means,
- the projecting sleeve portion (23) has on the outside at least one peripherally extending groove (25) with an elastic sealing ring (26) held therein,
- at its free end the socket (1) has a bore (27) which is concentric with respect to the axis of the pipe and which has a smooth wall whose inside diameter corresponds to the outside diameter of the projecting sleeve portion (23), and
- in the connecting position the projecting sleeve portion (23) is guided in positively locking relationship in the bore (27) in the sleeve (1).

2. A pipe connection according to claim 1 **characterised in that** the projecting sleeve portion (23) is of a greater radial wall thickness than the portion within the pipe end (20).

3. A pipe connection according to claim 1 or claim 2 **characterised in that** the projecting sleeve portion (23) is of the same outside diameter as the portion within the pipe end (20).

4. A pipe connection according to one of claims 1 to 3 **characterised in that** the elastic sealing ring (26) within the peripherally extending groove (25) is an O-ring of rubber.

5. A pipe connection according to one of claims 1 to 4 **characterised in that** the clamping ring (9) is in the form of a flange ring which can be braced- against the socket (1) by means of screw bolts (11) which are parallel to the axis.

6. A pipe connection according to one of claims 1 to 4 **characterised in that** the clamping ring is in the form of a union nut which is supported on a male screwthread provided on the socket.

## Revendications

1. Raccord de tuyaux amovible pour des tuyaux en matière synthétique pour des milieux liquides ou gazeux avec
- un manchon rigide qui reçoit l'extrémité du tuyau à raccorder,
- un collier tendeur qui peut étre mis en tension au manchon et qui exerce une force de pression axiale sur un anneau de serrage fendu entourant le tuyau
- une bague de présentation rigide et une bague d'étanchéité élastique qui s'applique dans une chambre d'étanchéité à l'extrémité frontale du manchon et
- une douille de support rigide à l'intérieur de l'extrémité du tuyau, avec un profilage, par exemple sous la forme de nervures s'étendant tout autour,
**caractérisé par** les caractéristiques :
- la douille de support (21) comprend un tronçon de douille extérieur (23) dépassant par rapport à l'extrémité (20) du tuyau,
- au tronçon de douille saillant (23), il est rapporté par formage à une distance de l'extrémité libre, une bride extérieure (24). comme délimitation de poussée d'insertion,
- le tronçon de douille saillant (23) possède à l'extérieur au moins une rainure (25) s'étendant tout autour avec une bague d'étanchéité élastique (26) retenue dans celle-ci,
- le manchon (1) présente à son extrémité libre un perçage (27) concentrique à l'axe du tuyau avec une paroi lisse dont le diamètre intérieur correspond au diamètre extérieur du tronçon de douille saillant (23) et
- en position d'assemblage, le tronçon de douille saillant (23) est guidé par concordance des formes dans le perçage (27) du manchon (1).

2. Raccord de tuyaux selon la revendication 1, **caractérisé en ce que** le tronçon de douille saillant (23) a une épaisseur de paroi radiale plus grande que le tronçon à l'intérieur de l'extrémité (20) du tuyau.

3. Raccord de tuyaux selon la revendication 1 ou 2, **caractérisé en ce que** le tronçon de douille saillant (23) présente le même diamètre extérieur que le tronçon situé à l'intérieur de l'extrémité (20) du tuyau.

4. Raccord de tuyaux selon l'une des revendications 1 à 3, **caractérisé en ce que** la bague d'étanchéité élastique (26) à l'intérieur de la rainure (25) s'étendant tout autour est un joint torique en caoutchouc.

5. Raccord de tuyaux selon l'une des revendications 1 à 4, **caractérisé en ce que** le collier tendeur (9) est réalisé comme collier de bride qui peut être tendu à l'aide de boulons filetés (11) parallèles à l'axe contre le manchon (1).

6. Raccord de tuyaux selon l'une des revendications 1 à 4, **caractérisé en ce que** le collier tendeur est réalisé comme écrou-raccord qui est logé sur un filetage extérieur prévu au manchon.
